# EUROPEAN PATENT APPLICATION

(11) **EP 4 408 078 A1**
(43) Date of publication of application: **31.07.2024**
(21) Application number: 21957908.3
(22) Date of filing: 24.09.2021
(51) Int. Cl.: H04W 52/02

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/120398
(87) International publication number: WO 2023/044781

(57) **Abstract**

Provided in the embodiments of the present application are a wireless communication method, and a device. The method comprises: according to an energy collection state of a terminal device, determining whether the terminal device can complete at least one processing process; and if it is determined that the terminal device cannot complete the at least one processing process, determining at least one target processing process according to the priority of the at least one processing process. By means of the technical solution of the present application, it can be ensured that a terminal device preferentially processes a process to be processed that has a high priority, so as to improve the reliability of the terminal device.

## Description

### TECHNICAL FIELD

The embodiments of the present disclosure relate to the field of communications, and more particularly to a wireless communication method and device.

### BACKGROUND

At present, there is a terminal device which requires to harvest ambient energy to perform operations such as channel scheduling, and data processing. For example, a semi-passive zero-power terminal can harvest radio waves by a Radio Frequency (RF) energy harvesting module. Based on this, the semi-passive zero-power terminal may continuously obtain the radio energy and store the obtained radio energy in an energy storage unit. After obtaining the sufficient energy, the energy storage unit may drive the low-power circuit to work, so as to implement the operations such as channel scheduling, and data processing.

However, such terminal device is unable to obtain stable energy. Therefore, in the case of limited energy, when multiple processing processes are to be executed by such terminal device, how to determine the processing processes to be processed or how to process the processing processes is an urgent technical problem to be solved in the present disclosure.

### SUMMARY

The embodiments of the present disclosure provide a wireless communication method and device to determine processes to be processed or process processes to be processed.

A first aspect provides a wireless communication method applied to a terminal device. The method includes operations as follows. Whether the terminal device is able to complete at least one processing process is determined according to an energy harvesting state of the terminal device. When it is determined that the terminal device is unable to complete the at least one processing process, at least one target processing process is determined according to a priority of the at least one processing process.

A second aspect provides a wireless communication method applied to a terminal device. The method includes operations as follows. Whether the terminal device is able to complete a first processing process is determined according to an energy harvesting state of the terminal device. When it is determined that the terminal device is able to complete the first processing process, the first processing process is processed.

A third aspect provides a terminal device including a processing unit. The processing unit is configured to: determine whether the terminal device is able to complete at least one processing process according to an energy harvesting state of the terminal device; and when it is determined that the terminal device is unable to complete the at least one processing process, determine at least one target processing process according to a priority of the at least one processing process.

A fourth aspect provides a terminal device including a processing unit. The processing unit is configured to: determine whether the terminal device is able to complete a first processing process according to an energy harvesting state of the terminal device; and when it is determined that the terminal device is able to complete the first processing process, process the first processing process.

A fifth aspect provides a terminal device including a processor and a memory. The memory is configured to store a computer program, and the processor is configured to invoke and run the computer program stored in the memory to perform the methods in the first aspect, the second aspect or implementations of the first aspect and the second aspect.

A sixth aspect provides a device configured to implement the method in the first aspect, the second aspect, or various implementations of the first aspect and the second aspect.

In particular, the device includes a processor. The processor is configured to invoke and run a computer program from a memory, to enable an apparatus installed with the device to perform the method in the first aspect, the second aspect or various implementations of the first aspect and the second aspect.

A seventh aspect provides a computer-readable storage medium configured to store a computer program that causes a computer to perform the method in the first aspect, the second aspect, or various implementations of the first aspect and the second aspect.

An eighth aspect provides a computer program product including computer program instructions that cause a computer to perform the method in the first aspect, second aspect, or various implementations of the first aspect and the second aspect.

A ninth aspect provides a computer program that, when run on a computer, causes the computer to perform the method in the first aspect, the second aspect, or various implementations of the first aspect and the second aspect.

According to the technical solution of the present disclosure, the terminal device may determine the process to be processed according to the priorities of the processing processes and further process the process to be processed. Based on this, according to the technical solution of the present disclosure, the terminal device may preferentially process the process to be processed with a high priority in a case of the limited energy, so as to improve the reliability of the terminal device. Optionally, each time a processing process arrives, the terminal device determines whether the terminal device is able to complete the processing process according to a current energy harvesting state thereof, and if it is determined that the terminal device is able to complete the processing process, the terminal device may process the processing process. Optionally, when the processing process with the high priority is present within a target time interval, the terminal device may preferentially process the processing process with the high priority to improve the reliability of the terminal device.

### BRIEF DESCRIPTION OF THE DRAWINGS

FIG. 1 is a schematic diagram of a communication system according to an embodiment of the present disclosure.
FIG. 2 is a schematic diagram of a zero-power communication system provided by the present disclosure.
FIG. 3 is a schematic diagram showing the principle of backscatter communication provided by the present disclosure.
FIG. 4 is a schematic diagram showing the principle of energy harvesting according to an embodiment of the present disclosure.
FIG. 5 is a schematic diagram showing the circuit principle of resistive load modulation provided by the embodiment of the present disclosure.
FIG. 6 is a schematic diagram of a wireless sensor network according to an embodiment of the present disclosure.
FIG. 7 is a flowchart of a wireless communication method according to an embodiment of the present disclosure.
FIG. 8 is a schematic diagram of processing processes within a target time interval according to an embodiment of the present disclosure.
FIG. 9 is a flowchart of another wireless communication method according to another embodiment of the present disclosure.
FIG. 10 is a schematic diagram of a terminal device 1000 according to an embodiment of the present disclosure.
FIG. 11 is a schematic diagram of a terminal device 1100 according to an embodiment of the present disclosure.
FIG. 12 is a schematic structural diagram of a terminal device 1200 according to an embodiment of the present disclosure.
FIG. 13 is a schematic structural diagram of a device according to an embodiment of the present disclosure.

### DETAILED DESCRIPTION

The technical solution in the embodiments of the disclosure is described below in conjunction with the drawings in the embodiments of the disclosure. It is apparent that the described embodiments are a part of the embodiments of the disclosure, rather than all of the embodiments. Based on the embodiments of the disclosure, all other embodiments obtained by those skilled in the art without creative effort fall within the scope of protection of the disclosure.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or".

In the description of the embodiments of the present disclosure, the term "correspondence" may mean that there is a direct correspondence or an indirect correspondence between the two objects, may also mean that there is an association relationship between the two objects, and may also be a relationship between indication and being indicated, configuration and being configured, etc.

Embodiments of the present disclosure may be applied to various communication systems, such as Global System of Mobile Communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Universal Mobile Telecommunications System (UMTS), Wireless Local Area Network (WLAN), Wireless Fidelity (Wi-Fi), next generation communication system, zero-power communication system, cellular Internet of Things or other communication systems.

In general, traditional communication systems support a limited number of connections and the connections are easy to implement. However, with the development of communication technology, mobile communication systems will not only support traditional communication, but also support, for example, Device To Device (D2D) communication, Machine To Machine (M2M) communication, Machine Type Communication (MTC), or Vehicle To Vehicle (V2V) communication, etc. Embodiments of the present disclosure may also be applied to these communication systems.

Optionally, the communication system in the embodiments of the present disclosure may be applied to a Carrier Aggregation (CA) scenario, a Dual Connectivity (DC) scenario, and a Standalone (SA) networking scenario.

The applied spectrum is not limited in the embodiments of the present disclosure. For example, the embodiments of the present disclosure may be applied to the licensed spectrum or the unlicensed spectrum.

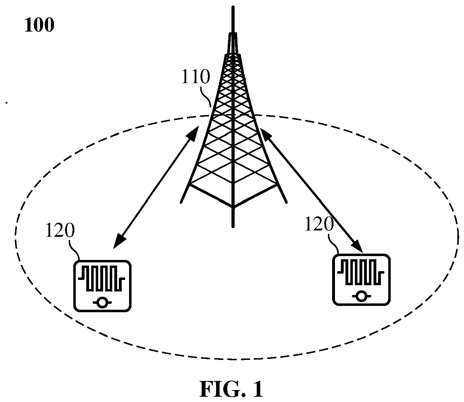

Exemplarily, the communication system 100 to which the embodiments of the present disclosure are applied is shown in FIG. 1. The communication system 100 may include a network device 110 that communicates with a terminal device 120 (or referred to as a communication terminal, or a terminal). The network device 110 may provide communication coverage for a particular geographic area and may communicate with terminal devices located within the coverage.

FIG. 1 exemplarily illustrates one network device and two terminal devices. In some embodiments, the communication system 100 may include multiple network devices, and other numbers of terminal devices may be included within the coverage of each network device, which is not limited by the embodiments of the present disclosure.

Optionally, the communication system 100 may also include other network entities, such as, network controllers, mobility management entities, etc., which are not limited by the embodiments of the present disclosure.

It is to be understood that a device having a communication function in the network or system in the embodiments of the present disclosure may be referred to as a communication device. The communication system 100 illustrated in FIG. 1 is taken as an example, the communication device may include a network device 110 and a terminal device 120 that both have the communication function, and the network device 110 and the terminal device 120 may be the devices described above, which will not be described herein. The communication device may also include other devices in the communication system 100, such as, network controllers, mobility management entities and other network entities, which are not limited in the embodiments of the present disclosure.

Embodiments of the present disclosure are described in connection with a network device and a terminal device. The network device may be a device configured to communicate with a mobile device, and the network device may be an Access Point (AP) in a WLAN, a Base Transceiver Station (BTS) in a GSM or CDMA, a NodeB (NB) in a WCDMA, an Evolutional Node B (eNB or eNodeB) in an LTE, a relay station or an access point, a vehicle-mounted device, a wearable device, a network device (gNB) in an NR network, or a network device in a future evolved PLMN network, etc.

In the embodiments of the present disclosure, the network device may provide a service for a cell, and the terminal device communicates with the network device through transmission resources (e.g. frequency resources, or spectrum resources) used by the cell. The cell may be a cell corresponding to the network device (e.g. base station), and the cell may belong to a macro base station or a base station corresponding to a small cell. The small cell may include a metro cell, a micro cell, a pico cell, a femto cell, etc. These small cells have characteristics of small coverage and low transmission power, and are suitable for providing a high-rate data transmission service.

In embodiments of the present disclosure, the terminal device may also be referred to as a User Equipment (UE), an access terminal, a subscriber unit, a subscriber station, a mobile station, a remote terminal, a mobile device, a user terminal, a terminal, a wireless communication device, a user agent or a user device, etc. The terminal device may be a STATION (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, or a zero-power device, etc.

By way of example and not as a limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also implements powerful functions through software support, data interaction and cloud interaction. The generalized wearable smart device has full functions and a large size, and the generalized wearable smart device may implement complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiment of the present disclosure, the terminal device may have an energy harvesting function and an energy storage function to store the energy harvested by the energy harvesting module. The terminal device may adopt, but is not limited to, at least one of following energy harvesting manners: a manner of harvesting a radio frequency signal; a manner of harvesting ambient light; a manner of harvesting vibration energy; or a manner of harvesting heat.

It should be noted that in the embodiment of the present disclosure, the terminal device may have a battery, and the energy harvesting module may supply energy to the battery, but is not limited thereto.

Exemplarily, in a zero-power communication system, the terminal device performs channel scheduling, data processing and the like mainly by harvesting the energy of the radio frequency signals, and related technology of the zero-power communication technology will be described below.

### I. Classification of zero-power terminals

The zero-power terminals may be classified into a passive zero-power terminal, a semi-passive zero-power terminal and an active zero-power terminal based on their energy source and usage mode.

For the passive zero-power terminal, a battery is not needed. When the passive zero-power terminal approaches the network device, the passive zero-power terminal is within a near field range formed through radiation of an antenna of the network device. Therefore, an antenna of the passive zero-power terminal generates an induced current through electromagnetic induction, and then the induced current drives a low-power chip circuit of the passive zero-power terminal, so as to demodulate a forward link signal and modulate a backward link signal. For a backscatter link, the passive zero-power terminal transmits the signal by means of backscatter.

Therefore, regardless of a forward link or a backward link, the passive zero-power terminal does not need a built-in battery to drive the low-power chip circuit, so that such terminal is a real zero-power terminal.

A RF circuit and a baseband circuit of the passive zero-power terminal are very simple. For example, the passive zero-power terminal does not have a Low Noise Amplifier (LNA), a PA, a crystal oscillator, and an Analog-to-Digital Converter (ADC) or the like, so that the passive zero-power terminal has various advantages of small size, light weight, cheap price, and long service life.

For the semi-passive zero-power terminal, the conventional battery is also not mounted, but the RF energy harvesting module is used to harvest radio energy, and the harvested energy is stored in an energy storage unit, such as, a capacitor. After obtaining the energy, the energy storage unit may drive the low-power chip circuit of the semi-passive zero-power terminal, so as to demodulate the forward link signal and modulate the backward link signal. For the backscatter link, the semi-passive zero-power terminal transmits the signal by means of backscatter.

Therefore, regardless of a forward link or a backward link, the semi-passive zero-power terminal does not need a built-in battery to drive the low-power chip circuit,. Although the semi-passive zero-power terminal has the energy storage unit to store energy, the energy is derived from radio energy harvested by the RF energy harvesting module, so that the semi-passive zero-power terminal is also a real zero-power terminal.

In addition, the semi-passive zero-power terminal also have various advantages of the passive zero-power terminal, for example, advantages of small size, light weight, cheap price, and long service life.

For the active zero-power terminal, in some scenarios, the zero-power terminal used may also be an active zero-power terminal, and the terminal may be provided with a built-in battery. The battery is configured to drive the low-power chip circuit of the zero-power terminal, so as to demodulate the forward link signal and modulate the backward link signal. However, for the backscatter link, such terminal transmits the signal by means of backscatter. Therefore, zero power consumption of the terminal is mainly reflected in the fact that signal transmission of the backward link does not require the power of the terminal per se, but uses a backscatter mode.

The built-in battery of the active zero-power terminal may supply power to the low-power chip circuit, to increase the read-write distance of the active zero-power terminal and improve the reliability of communication. Therefore, the active zero-power terminal may be applied in some scenarios having high requirements on communication distance and reading delay.

### II. Principle of zero-power communication technology

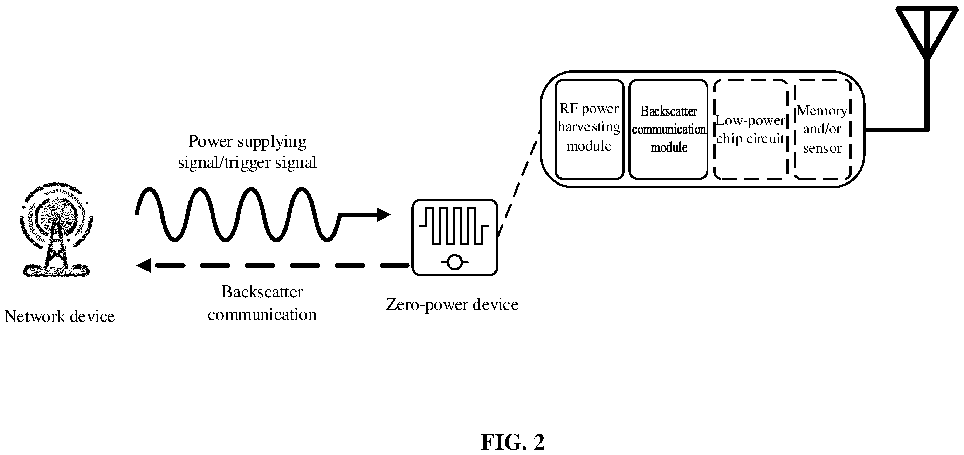

The zero-power communication uses energy harvesting and backscatter communication technologies. The zero-power communication system is constituted by the network device and a zero-power terminal. As shown in FIG. 2, the zero-power terminal may be the semi-passive zero-power terminal described above. The network device is configured to send a power supplying signal and a downlink communication signal to the zero-power terminal, and receive a backscatter signal of the zero-power terminal. The zero-power terminal may include an RF energy harvesting module, a backscatter communication module, and a low-power chip circuit. In addition, the zero-power terminal may also be provided with a memory configured to store some basic information (such as an item identifier) and also be provided with a sensor configured to acquire sensing data such as an ambient temperature and an ambient humidity.

In the embodiment of the present disclosure, the power supplying signal is used for supplying power to the zero-power terminal to trigger the zero-power terminal to operate. Therefore, the power supplying signal is also referred to as a trigger signal. Optionally, the power supplying signal is also referred to as a carrier signal.

The key technologies of the zero-power communication mainly include: radio frequency energy harvesting and backscatter communication.

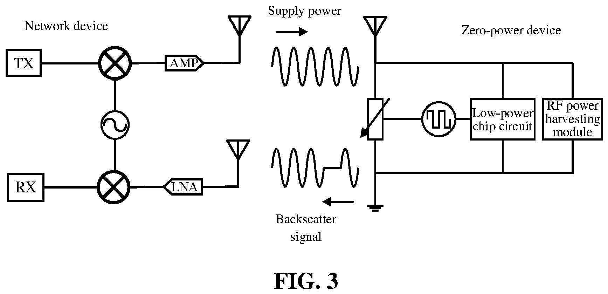

As shown in FIG. 3, the zero-power terminal receives the power supplying signal sent by the network device, harvests energy through the RF energy harvesting module, and then supplies power to the low-power chip circuit, modulates the power supplying signal and performs backscatter. The main characteristics are described as follows.
(1) The zero-power terminal does not transmit a signal, and achieves the backscatter communication by modulating the power supplying signal.
(2) The zero-power terminal does not rely on a conventional active Power Amplifier (PA) transmitter, and uses a low-power calculation unit, thereby greatly reducing hardware complexity.
(3) Battery-free communication may be realized in combination with energy harvesting.

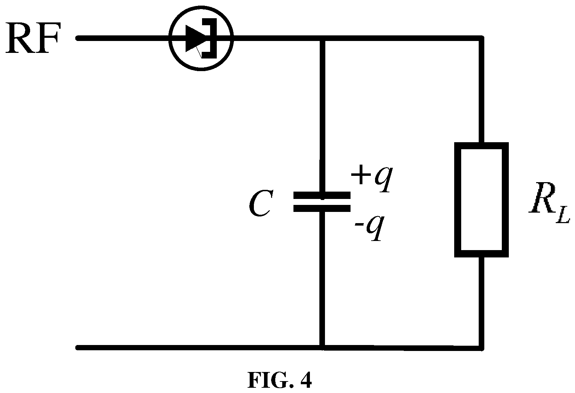

As shown in FIG. 4, the zero-power terminal may use RF energy harvesting module to harvest space electromagnetic wave energy through electromagnetic induction, and then drive low-power chip circuits and sensors.

Load modulation is a method which is often used by the zero-power terminal to transmit data to the network device. The load modulation is to adjust electrical parameters of an oscillation circuit of the zero-power terminal according to the beat of a data stream, so as to enable a value and a phase of the impedance of the zero-power terminal to vary accordingly, thereby completing a modulation process. A load modulation technology mainly includes resistive load modulation and capacitive load modulation.

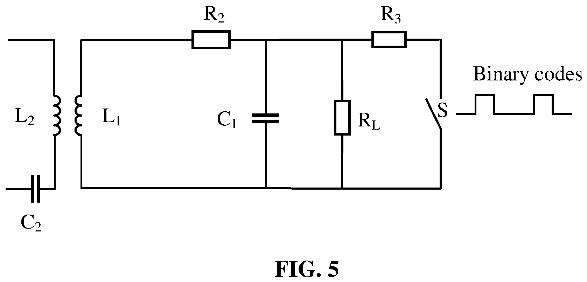

In the resistive load modulation, a load is connected in parallel with a resistor, called as the load modulation resistor. The resistor is turned on or off based on clock of a data stream, and the switch S is controlled to be turned on or off by binary data coding. The circuit principle of the resistive load modulation is shown in FIG. 5.

In the capacitive load modulation, a load is connected in parallel with a capacitor, and the capacitor replaces the load modulation resistor controlled by the binary data coding in FIG. 5.

The data transmitted by the zero-power terminal may use codes of different forms to represent binary "1" and "0". A RF identification system generally uses one of the following coding methods: Non Return Zero (NRZ) coding, Manchester coding, Unipolar RZ coding, Differential Bi-Phase (DBP) coding, the Miller coding, differential dynamic coding, etc. Generally speaking, different pulse signals are used to represent 0 and 1.

As mentioned above, at present, there is a terminal device, such as a semi-passive zero-power terminal, that needs to harvest ambient energy to perform operations such as channel scheduling, and data processing. The semi-passive zero-power terminal can use the RF energy harvesting module to harvest radio waves. Based on this, the semi-passive zero-power terminal may continuously obtain the radio energy and store the obtained radio energy in the energy storage unit. After obtaining the sufficient energy, the energy storage unit may drive low-power circuit to operate, so as to implement the operations such as channel scheduling, and data processing. However, such terminal device is unable to obtain stable energy. Therefore, in the case of the limited energy, when multiple processing processes to be processed are to be executed by such terminal, how to determine the processing processes to be processed or how to process the processing processes is an urgent technical problem to be solved in the present disclosure.

In order to solve the above technical problems, the processes to be processed may be determined according to the priorities of various processing processes in the present disclosure. Optionally, the processes to be processed may be determined according to a time sequence of various processing processes. When a processing process is to be processed each time, whether the current energy of the terminal device is sufficient to process the processing process is determined, and if the current energy is sufficient to process the processing process, the processing process may be processed.

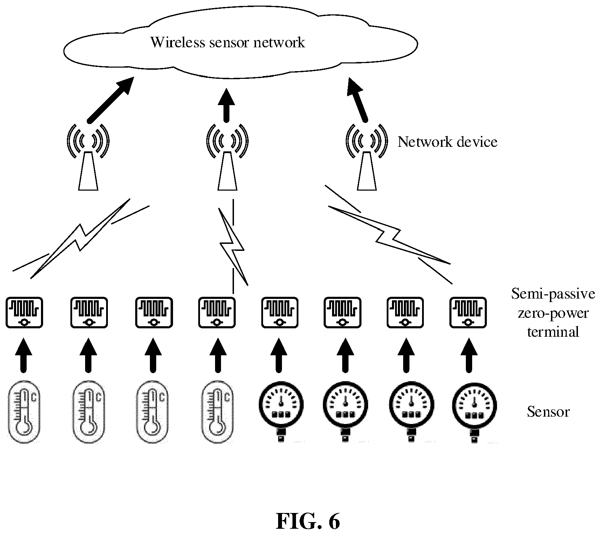

It should be understood that in the embodiment of the present disclosure, the work or process which is implemented by harvesting energy through the terminal device is referred to as a processing process. For example, the semi-passive zero-power terminal has the function of energy harvesting, and the harvested energy may be used for receiving a signal, sending a signal, measurement, coding and decoding, etc. In addition to driving the terminal to operate in the communication process, the harvested energy may also be used for information collection in some scenarios. For example, in the cellular Internet of Things scenario, the semi-passive zero-power terminal combined with the sensor needs to read and store data (such as temperature, pressure and other information) obtained by the sensor,. FIG. 6 is a schematic diagram of a wireless sensor network according to an embodiment of the present disclosure. As shown in FIG. 6, a semi-passive zero-power terminal may read sensor data, and transmit the sensor data to the network device through a backscatter link with the network device. In this case, the energy obtained by the semi-passive zero-power terminal through the energy harvesting may be used for collecting and storing the sensor data. The semi-passive zero-power terminal may also supply power to the sensor through the energy harvesting, or through other power supplying device. Based on this, the processing processes in the embodiment of the present disclosure may include, but is not limited to, receiving the signal, sending the signal, the measurement, the coding and decoding, the data collection, the data storage, etc.

The technical solution of the present disclosure will be described in detail below.

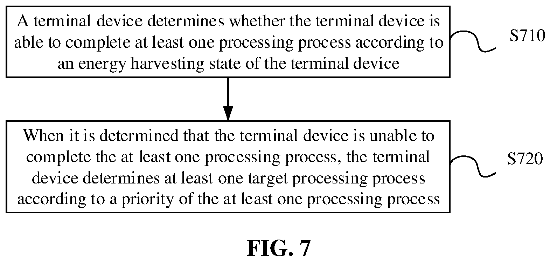

FIG. 7 is a flowchart of a wireless communication method according to an embodiment of the present disclosure. As shown in FIG. 7, the method includes operations S710 and S720.

In operation S710, a terminal device determines whether the terminal device is able to complete at least one processing process according to an energy harvesting state of the terminal device.

In operation S720, when it is determined that the terminal device is unable to complete the at least one processing process, the terminal device determines at least one target processing process according to a priority of the at least one processing process.

In some implementations, the energy harvesting state of the terminal device may be represented by a percentage of a current energy of the terminal device to the full energy of the terminal device, and the full energy refers to 100% energy of the terminal device. For example, if the energy harvesting state of the terminal device is 80%, the current energy of the terminal device is 80% of the full energy of the terminal device.

In some implementations, the energy harvesting state of the terminal device may be represented as a high level, a middle level or a low level. For example, if the percentage of the current energy of the terminal device to the full energy of the terminal device is lower than a first threshold, the energy harvesting state of the terminal device is the low state or the low level. If the percentage of the current energy of the terminal device to the full energy of the terminal device is higher than or equal to the first threshold and lower than a second threshold, the energy harvesting state of the terminal device is the middle state or the middle level. If the percentage of the current energy of the terminal device to the full energy of the terminal device is higher than or equal to the second threshold, the energy harvesting state of the terminal device is the high state or the high level. The first threshold is smaller than the second threshold.

In a word, a representation manner of the energy harvesting state of the terminal device is not limited in the present disclosure.

It should be understood that the at least one processing process refers to a processing process to be completed by the terminal device.

In some implementations, the at least one processing process is to be completed within a target time interval.

It should be understood that the target time interval includes a starting moment and the length of the target time interval.

In some implementations, a starting moment of the target time interval is predefined or configured by a network device, but is not limited thereto.

In some implementations, the length of the target time interval is predefined or configured by a network device, but is not limited thereto.

In some implementations, the target time interval is predefined or configured by a network device, but not limited thereto. That is, the starting moment and the length of the target time interval are predefined, or configured by the network device.

In some implementations, the target time interval is associated with at least one of a capability of the terminal device or a signal measurement result, but which is not limited thereto.

In some implementations, the capability of the terminal device includes, but is not limited to at least one of:
an energy storage capacity of the terminal device;
an energy harvesting duration of the terminal device;
an energy harvesting efficiency of the terminal device; and
an energy harvesting speed of the terminal device.

In some implementations, the length of the target time interval increases or decreases as the capability of the terminal device gets high. For example, as the energy storage capacity of the terminal device gets high, and/or the energy harvesting duration of the terminal device gets long, and/or the energy harvesting efficiency of the terminal device gets high, and/or the energy harvesting speed of the terminal device gets fast, the length of the target time interval increases or decreases.

In some implementations, the signal measurement result includes, but is not limited to: a strength of a power supplying signal received by the terminal device. For example, as the strength of the power supplying signal gets high, which indicates that the energy harvesting speed of the terminal device gets fast, the target time interval increases and decreases.

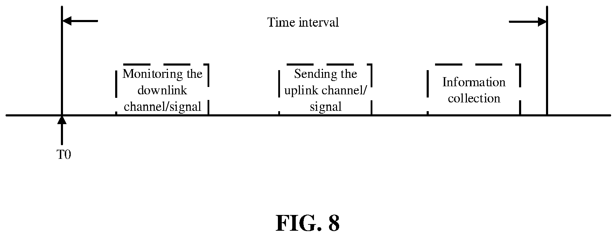

In some implementations, the energy harvesting state of the terminal device is the energy harvesting state corresponding to the target time interval. For example, as shown in FIG. 8, the terminal device may determine an energy harvesting state at the moment T0. That is to say, the energy harvesting state is the energy harvesting state of the terminal device at the moment T0, and the starting moment of the target time interval is the moment T0.

In some implementations, the terminal device determines a working duration according to the energy harvesting state, and may determine a processing time of each of the at least one processing process, and the processing time includes a processing starting time and a processing duration. Based on the working duration and the processing time, whether the terminal device is able to complete the at least one processing process is determined. Optionally, the terminal device determines power consumption of each of the at least one processing process, and determines, in combination with the energy harvesting state of the terminal device, whether the at least one processing process can be completed. For example, the terminal device determines that the at least one processing process includes a processing process 1 having a power consumption of 10% and a processing process 2 having a power consumption of 20%, i.e., the sum of the power consumption is 30%, and the energy harvesting state is 10%. In this case, the terminal device is unable to complete the two processing processes.

In a word, how to determine whether the terminal device is able to complete at least one processing process is not limited in the present disclosure.

In some implementations, the priority of the at least one processing process is determined according to a priority rule based on a type of the at least one processing process.

It should be understood that the processing process involved in the embodiments of the present disclosure includes, but not limited to, following processing processes: receiving a downlink channel/signal; sending an uplink channel/signal, which includes scheduling-based and scheduling-free transmission; demodulating and decoding the downlink channel; coding and modulating the uplink channel; signal measurement; and a synchronization process; collecting, accessing and processing external information, such as collecting, accessing and processing sensor information and positioning information; and generating information source data, including accessing, calculating, mapping, etc, information source data such as channel state feedback information, Hybrid Automatic Repeat reQuest (HARQ) information, data, etc; a random access process; and an interaction with third-party devices, which includes information transmission.

These processing processes may be classified into several processing process types, such as dynamic scheduling type, scheduling-free type, data processing type, but which is not limited thereto.

In some implementations, the processing process of the dynamic scheduling type includes, but is not limited to: downlink dynamic scheduling, and uplink dynamic scheduling.

In some implementations, the processing process of the scheduling-free type includes, but is not limited to: downlink scheduling-free, and uplink dynamic scheduling.

In some implementations, the processing process of the data processing type includes, but is not limited to: collecting, accessing and processing external information, interaction with the third-party devices, signal measurement, synchronization process, and the like.

It should be understood that, when the processing processes are classified, some processes are bound together to consider energy use. For example, the receiving the downlink channel/signal is bound to the demodulating and decoding the downlink channel, and may further be bound to the HARQ feedback. For another example, the sending the uplink channel/signal is bound to the coding and modulating the uplink channel. Based on this, the downlink dynamic scheduling includes: receiving the downlink channel/signal, demodulating and decoding the downlink channel, etc. The uplink dynamic scheduling includes: sending the uplink channel/signal, coding and modulating the uplink channel, etc. Similarly, the downlink scheduling-free also includes: receiving the downlink channel/signal, demodulating and decoding the downlink channel, etc. The uplink scheduling-free also includes: sending the uplink channel/signal, coding and modulating the uplink channel, etc.

Exemplarily, the monitoring the downlink channel/signal shown in FIG. 8 may be bound to the demodulating and decoding of the downlink channel or bound to the downlink signal measurement, to form a processing process. The sending the uplink channel/signal may be bound to the coding and modulating the data carried by the uplink channel, etc. to form a processing process.

In some implementations, the priority rule is predefined or configured by the network device, but are not limited thereto.

In some implementations, the priority rules include that a priority of a processing process of the dynamic scheduling type is higher than a priority of a processing process of the scheduling-free type; and the priority of the processing process of the scheduling-free type is higher than a priority of a processing process of the data processing type.

In other implementations, the priority of the at least one processing process is predefined, which is not limited thereto.

Exemplarily, the at least one processing process is the processing process of the scheduling-grant type and/or the processing process of the data processing type, and the priorities of these processing processes may be predefined.

In still other implementations, the priority of the at least one processing process is configured by the network device, which is not limited thereto.

In some implementations, the priority of the at least one processing process is configured by the network device in a semi-static manner, which is not limited thereto.

In some implementations, a priority of a first processing process is carried in a scheduling indication sent by the network device. The first processing process is any one of the at least one processing process that is scheduled in a dynamic scheduling manner or a semi-static scheduling manner, which is not limited thereto.

Exemplarily, assumed that the at least one processing process includes the processing process of the scheduling-free type, the processing process of the dynamic scheduling type, and the processing process of the data processing type, the priorities of the processing process of the scheduling-free type and/or the processing process of the data processing type may be predefined. The priority of the processing process of the dynamic scheduling type may be carried in the scheduling indication sent by the network device, such as, the Downlink Control Information (DCI). For example, as shown in FIG. 8, assumed that the monitoring the downlink channel/signal is a processing process of the dynamic scheduling type, and the priority carried in the scheduling indication corresponding to the processing process is 2. It is assumed that the sending the uplink channel/signal is a processing process of the dynamic scheduling type, and the priority carried in the scheduling indication corresponding to the processing process is 1.

In a word, the manner in which the priority of the at least one processing process is acquired is not limited in the embodiment of the present disclosure.

In some implementations, it is assumed that the terminal device processes the processing processes according to the priority of the at least one processing process, for example, the terminal device processes the at least one processing process according to an descending order of the priorities. In this case, the terminal device may determine at least one target processing process according to the processing times of the processing processes, and the processing time include the processing starting time and the processing duration. The processes to be processed are included in the at least one processing process.

In some implementations, in case that two processing processes have the same priority, the terminal device preferentially processes the processing process, having an earlier starting time, among the two processing processes, which is not limited thereto.

In some implementations, in case that a processing process having a high priority is located after a processing process having a low priority, the terminal device processes the processing process having the high priority and skip the processing process having the low priority.

In some implementations, after the terminal device determines the at least one target processing process, the terminal device may process the processes to be processed according to the priority sequence of the processes to be processed, or according to a time sequence of the processing processes to be processed, but are not limited thereto.

It should be understood that assuming that two processing processes have the same priority, the terminal device may preferentially processes the processing process having an earlier time, which is not limited thereto.

For example, as shown in FIG. 8, the terminal device determines that the processes to be processed within the target time interval are the monitoring the downlink channel/signal and the sending the uplink channel/signal, the priority corresponding to the monitoring the downlink channel/signal is 2 and the priority corresponding to the sending the uplink channel/signal is 1, and the priority increases as the priority index gets small. In this case, according to the priority sequence of the processes to be processed, the terminal device may perform the sending the uplink channel/signal having the priority 1, and the terminal device skips the execution of the monitoring the downlink channel/signal since the execution time of the monitoring the downlink channel/signal is before to the sending the uplink channel/signal. Optionally, according to the time sequence of the processes to be processed, the terminal device may perform the monitoring the downlink channel/signal having the priority 2, and then perform the sending the uplink channel/signal having the priority 1.

To sum up, in the embodiment of the present disclosure, the terminal device may determine the processes to be processed according to the priorities of various processing processes, and then process the processes to be processed. Based on this, according to the technical solution of the present disclosure, it can be ensured that the terminal device may preferentially process the process to be processed having high priority in a case of limited energy, so as to improve the reliability of the terminal device.

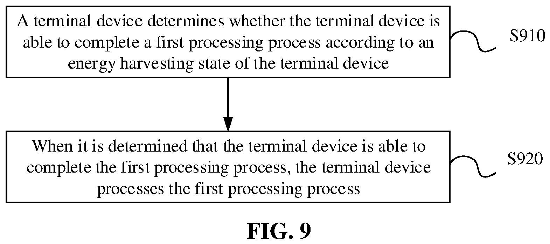

FIG. 9 is a flowchart of another wireless communication method according to an embodiment of the present disclosure. As shown in FIG. 9, the method includes operations S910 and S920.

In operation S910, a terminal device determines whether the terminal device is able to complete a first processing process according to an energy harvesting state of the terminal device.

In operation S920, when it is determined that the terminal device is able to complete the first processing process, the terminal device processes the first processing process.

It should be understood that the core idea of the embodiment of the present disclosure is described as follows. The terminal device performs the processing processes according to the time sequence of the processing processes. That is to say, each time a processing process arrives, the terminal device determines whether the terminal device is able to complete the processing process according to a current energy harvesting state, and when it is determined that the terminal device is able to complete the processing process, the terminal device may process the processing process.

In the embodiment of the present disclosure, the first processing process is the currently arrived processing process.

In some implementations, the terminal device determines the energy harvesting state of the terminal device. For example, the terminal device determines an energy harvesting state when the first processing process arrives.

It should be understood that regarding the energy harvesting state, reference may be made to the above description, which is not repeated herein.

In some implementations, the terminal device determines a working duration according to the energy harvesting state, and may determine the processing time of the first processing process including a processing starting time and a processing duration. Whether the terminal device is able to complete the first processing process is determined based on the working duration and the processing time. Optionally, the terminal device may determine the power consumption of the first processing process and determines, in combination with the energy harvesting state of the terminal device, whether the first processing process can be completed. For example, the terminal device determines that the power consumption of the first processing process is 20% and the energy harvesting state of the terminal device is 10%, which indicates that the terminal device is unable to complete the first processing process.

In a word, how to determine whether the terminal device is able to complete the first processing process is not limited in the present disclosure.

In some implementations, the terminal device does not process the first processing in response to determining that the terminal device is unable to complete the first processing process.

In some implementations, when the processing process having a high priority is present within the target time interval, i.e. a second processing process having a priority higher than a preset priority, in order to ensure that such processing process can be processed, the terminal device may determine whether the second processing process having a priority higher than the preset priority is present within the target time interval before the terminal device determines according to the energy harvesting state of the terminal device whether the terminal device is able to complete the first processing process. If the second processing process is not present within the target time interval, the terminal device determines whether the terminal device is able to complete the first processing process according to the energy harvesting state. If the second processing process is present within the target time interval, the terminal device processes the second processing process and does not process the first processing process. That is to say, if the second processing process is present within the target time interval, the terminal device reserves the harvested energy for preferentially processing the processing process having the high priority.

It should be understood that the target time interval includes the starting moment and the length of the target time interval.

In some implementations, the starting moment of the target time interval is the arrival time of the first processing process, which is not limited in the present disclosure.

In some implementations, the starting moment of the target time interval is predefined or configured by the network device, which is not limited thereto.

In some implementations, the length of the target time interval is predefined or configured by the network device, which is not limited thereto.

In some implementations, the target time interval is predefined or configured by a network device, which is not limited thereto, i.e. the starting moment and the length of the target time interval are predefined, or the starting moment and the length of the target time interval are configured by the network device.

In some implementations, the target time interval is associated with at least one of a capability of the terminal device or a signal measurement result, but which is not limited thereto.

In some implementations, the capability of the terminal device includes, but is not limited to at least one of:
an energy storage capacity of the terminal device;
an energy harvesting duration of the terminal device;
an energy harvesting efficiency of the terminal device; and
an energy harvesting speed of the terminal device.

In some implementations, the length of the target time interval increases or decreases as the capability of the terminal device gets high. For example, as the energy storage capacity of the terminal device gets high, and/or the energy harvesting duration of the terminal device gets long, and/or the energy harvesting efficiency of the terminal device gets high, and/or the energy harvesting speed of the terminal device gets fast, the length of the target time interval increases or decreases.

In some implementations, the signal measurement result includes, but is not limited to: a strength of a power supplying signal received by the terminal device. For example, as the strength of the power supplying signal gets high, which indicates that the energy harvesting speed of the terminal device gets fast, the target time interval increases and decreases.

In some implementations, the energy harvesting state of the terminal device is the energy harvesting state corresponding to the target time interval.

To sum up, in the embodiment of the present disclosure, each time a processing process arrives, the terminal device determines whether the terminal device is able to complete the processing process according to a current energy harvesting state, and when it is determined that the terminal device is able to complete the processing process, the terminal device may process the processing process. Optionally, when there is a processing process having a high priority within the target time interval, the terminal device may determine whether the second processing process having a priority higher than the preset priority is present within the target time interval before the terminal device determines according to the energy harvesting state of the terminal device whether the terminal device is able to complete the first processing process. If the second processing process is not present within the target time interval, the terminal device determines whether the terminal device is able to complete the first processing process according to the energy harvesting state. If the second processing process is present within the target time interval, the terminal device processes the second processing process and does not process the first processing process. That is to say, if the second processing process is present within the target time interval, the terminal device reserves the harvested energy for preferentially processing the processing process having the high priority, so as to improve the reliability of the terminal device.

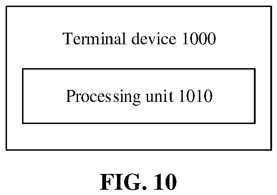

FIG. 10 is a schematic diagram of a terminal device 1000 according to an embodiment of the present disclosure. As shown in FIG. 10, the terminal device 1000 includes a processing unit 1010. The processing unit 1010 is configured to: determine whether the terminal device is able to complete at least one processing process according to an energy harvesting state of the terminal device; and when it is determined that the terminal device is unable to complete the at least one processing process, determine at least one target processing process according to a priority of the at least one processing process.

In some implementations, the processing unit is further configured to: determine at least one processing process to be completed within a target time interval; and determine an energy harvesting state corresponding to the target time interval.

In some implementations, a starting moment of the target time interval is predefined or configured by a network device.

In some implementations, the length of the target time interval is predefined or configured by a network device.

In some implementations, the target time interval is predefined or configured by a network device.

In some implementations, the target time interval is associated with at least one of a capability of the terminal device or a signal measurement result.

In some implementations, the capability of the terminal device includes, but is not limited to at least one of:
an energy storage capacity of the terminal device;
an energy harvesting duration of the terminal device;
an energy harvesting efficiency of the terminal device; and
an energy harvesting speed of the terminal device.

In some implementations, the signal measurement result includes a strength of a power supplying signal received by the terminal device.

In some implementations, the priority of the at least one processing process is determined according to a priority rule based on a type of the at least one processing process.

In some implementations, the priority rule is predefined or configured by the network device.

In some implementations, the type of the at least one processing process includes at least one of: a dynamic scheduling type, a scheduling-free type, a data processing type.

In some implementations, the priority rule includes that a priority of a processing process of the dynamic scheduling type is higher than a priority of a processing process of the scheduling-free type; and the priority of the processing process of the scheduling-free type is higher than a priority of a processing process of the data processing type.

In some implementations, the priority of the at least one processing process is predefined.

In some implementations, the priority of the at least one processing process is configured by the network device.

In some implementations, the priority of the at least one processing process is configured by the network device in a semi-static manner.

In some implementations, a priority of a first processing process is carried in a scheduling indication sent by the network device, the first processing process is any one of the at least one processing process that is scheduled in a dynamic scheduling manner or a semi-static scheduling manner.

In some implementations, the processing unit 1010 is further configured to process the at least one target processing process according to a priority sequence of the at least one target processing process.

In some implementations, the processing unit 1010 is further configured to process the at least one target processing process according to a time sequence of the at least one target processing process.

In some implementations, the terminal device adopts at least one of following energy harvesting manners:
a manner of harvesting a radio frequency signal;
a manner of harvesting ambient light;
a manner of harvesting vibration energy; and
a manner of harvesting heat.

In some implementations, the communication unit may be a communication interface or transceiver, or an input-output interface of a communication chip or a system-on-chip.

It should be understood that the terminal device 1000 according to the embodiment of the present disclosure may correspond to the terminal device in the method embodiments shown in FIG. 7, and the above and other operations and/or functions of various units in the terminal device 1000 are to implement the corresponding flows performed by the terminal device in the method embodiments shown in FIG. 7. For the sake of brevity, details are not described herein again.

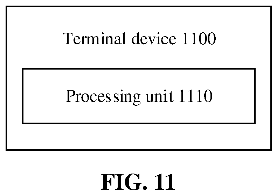

FIG. 11 is a schematic diagram of a terminal device 1100 according to an embodiment of the present disclosure. As shown in FIG. 11, the terminal device 1100 includes a processing unit 1110 configured to: determine whether the terminal device is able to complete a first processing process according to an energy harvesting state of the terminal device; and when it is determined that the terminal device is able to complete the first processing process, process the first processing process.

In some implementations, the processing unit 1110 is further configured to: when it is determined that the terminal device is unable to complete the first processing procedure, not process first processing procedure.

In some implementations, the processing unit 1110 is further configured to: determine the energy harvesting state of the terminal device.

In some implementations, the processing unit 1110 is further configured to: determine whether there is a second processing process having a priority higher than a preset priority within a target time interval. The processing unit 1110 is configured to: when there is no the second processing process within the target time interval, determine whether the terminal device is able to complete the first processing process according to the energy harvesting state.

In some implementations, the processing unit 1110 is further configured to: when there is the second processing process within the target time interval, process the second processing process and not process the first processing process.

In some implementations, a starting moment of the target time interval is predefined or configured by a network device.

In some implementations, a length of the target time interval is predefined or configured by a network device.

In some implementations, the target time interval is predefined or configured by a network device.

In some implementations, the target time interval is associated with at least one of a capability of the terminal device or a signal measurement result.

In some implementations, the capability of the terminal device includes at least one of:
an energy storage capacity of the terminal device;
an energy harvesting duration of the terminal device;
an energy harvesting efficiency of the terminal device; and
an energy harvesting speed of the terminal device.

In some implementations, the signal measurement result includes: a strength of a power supplying signal received by the terminal device.

In some implementations, the communication unit may be a communication interface or transceiver, or an input-output interface of a communication chip or a system-on-chip.

It should be understood that the terminal device 1100 according to the embodiment of the present disclosure may correspond to the terminal device in the method embodiments shown in FIG. 9, and the above and other operations and/or functions of various units in the terminal device 1100 are to implement the corresponding flows performed by the terminal device in the method embodiments shown in FIG. 9.

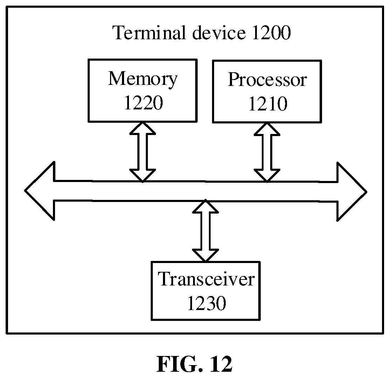

FIG. 12 is a schematic structural diagram of a terminal device 1200 according to an embodiment of the present disclosure. The terminal device 1200 shown in FIG. 12 includes a processor 1210. The processor 1210 is configured to invoke and run a computer program from a memory to implement the methods in the embodiments of the present disclosure.

Optionally, as shown in FIG. 12, the terminal device 1200 may also include a memory 1220. The processor 1210 may invoke and run a computer program from the memory 1220 to implement the methods in the embodiments of the present disclosure.

The memory 1220 may be a separate device independent of or integrated into the processor 1210.

Optionally, as shown in FIG. 12, the terminal device 1200 may also include a transceiver 1230. The processor 1210 may control the transceiver 1230 to communicate with other devices, in particular, sending information or data to other devices, or receiving information or data sent by other devices.

The transceiver 1230 may include a transmitter and a receiver. The transceiver 1230 may further include an antenna(s), the number of which may be one or more.

Optionally, the terminal device 1200 may implement the corresponding processes implemented by the network device in the various methods in the embodiments of the present disclosure, which will not be repeated herein for the sake of brevity.

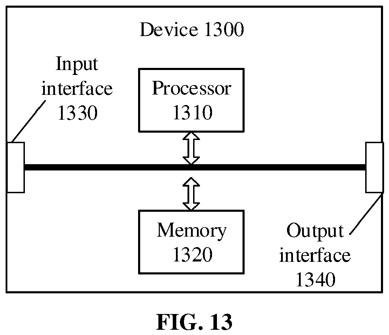

FIG. 13 is a schematic structural diagram of a device according to an embodiment of the present disclosure. The device 1300 shown in FIG. 13 includes a processor 1310. The processor 1310 is configured to invoke and run a computer program from a memory to implement the methods in the embodiments of the present disclosure.

Optionally, as shown in FIG. 13, the device 1300 may also include a memory 1320. The processor 1310 may invoke and run a computer program from the memory 1320 to implement the methods in the embodiments of the present disclosure.

The memory 1320 may be a separate device independent of or integrated into the processor 1310.

Optionally, the device 1300 may also include an input interface 1330. The processor 1310 may control the input interface 1330 to communicate with other devices or chips, and in particular, may obtain information or data sent by other devices or chips.

Optionally, the device 1300 may also include an output interface 1340. The processor 1310 may control the output interface 1340 to communicate with other devices or chips, and in particular, outputting information or data to other devices or chips.

Optionally, the device may be applied to the terminal device in the embodiments of the present disclosure, and the device may implement the corresponding processes implemented by the terminal device in the various methods in the embodiments of the present disclosure, which will not be repeated herein for the sake of brevity.

Optionally, the device mentioned in the embodiments of the present disclosure may also be a chip. For example, the device may be a system level chip, a system chip, a chip system or an on-chip system chip, etc.

It is to be understood that the processor in the embodiment of the present disclosure may be an integrated circuit chip and has a signal processing capacity. In an implementation process, various operations of the method embodiments may be completed by an integrated logical circuit of hardware in the processor or an instruction in a software form. The above processor may be a general processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the present disclosure may be implemented or executed. The general processor may be a microprocessor or the processor may also be any conventional processor and the like. The operations of the method described in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the operations of the method in combination with hardware.

It can be understood that the memory in the embodiment of the present disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include, but not limited to, memories of these and any other proper types.

The embodiments of the present disclosure further provide a computer-readable storage medium, which is configured to store a computer program.

Optionally, the computer-readable storage medium may be applied to a network device or a base station in the embodiments of the present disclosure. The computer program enables a computer to perform corresponding flows implemented by the network device or the base station in each method in the embodiments of the present disclosure. For simplicity, elaborations are omitted herein.

Optionally, the computer-readable storage medium may be applied to a mobile terminal/terminal device in the embodiments of the present disclosure. The computer program enables a computer to perform corresponding flows implemented by the mobile terminal/terminal device in each method in the embodiments of the present disclosure. For simplicity, elaborations are omitted herein.

The embodiments of the present disclosure further provide a computer program product, which stores computer program instructions.

Optionally, the computer program product may be applied to a network device or a base station in the embodiments of the present disclosure. The computer program instructions enable a computer to perform corresponding flows implemented by the network device or the base station in each method in the embodiments of the present disclosure. For simplicity, elaborations are omitted herein.

Optionally, the computer program product may be applied to a mobile terminal/terminal device in the embodiments of the present disclosure. The computer program instructions enable the computer to perform corresponding flows implemented by the mobile terminal/terminal device in each method in the embodiments of the present disclosure. For simplicity, elaborations are omitted herein.

The embodiments of the present disclosure further provide a computer program.

Optionally, the computer program may be applied to a network device or a base station in the embodiments of the present disclosure. The computer program may run in a computer to enable the computer to perform corresponding flows implemented by the network device or the base station in each method in the embodiments of the present disclosure. For simplicity, elaborations are omitted herein.

Optionally, the computer program may be applied to a mobile terminal/terminal device in the embodiments of the present disclosure. The computer program may run in the computer to enable the computer to perform corresponding flows implemented by the mobile terminal/terminal device in each method in the embodiments of the present disclosure. For simplicity, elaborations are omitted herein.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that regarding the specific working processes of the system, device and unit described above, reference may be made to the corresponding processes in the method embodiment and will not be elaborated herein for convenient and brief description.

In some embodiments provided by the present disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, functional units in each embodiment of the present disclosure may be integrated into a processing unit, various units may also physically exist independently, and two or more than two units may also be integrated into a unit.

When being realized in form of software functional unit and sold or used as an independent product, the function may also be stored in a computer-readable storage medium. For such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The foregoing is only the specific implementation mode of the present disclosure and not intended to limit the scope of protection of the present disclosure. Any variations or replacements apparent to those skilled in the art within the technical scope disclosed by the present disclosure shall fall within the scope of protection of the disclosure. Therefore, the scope of protection of the present disclosure shall be subject to the scope of protection of the claims.

## Claims

1. A wireless communication method, applied to a terminal device, comprising:
determining, according to an energy harvesting state of the terminal device, whether the terminal device is able to complete at least one processing process; and
when it is determined that the terminal device is unable to complete the at least one processing process, determining at least one target processing process according to a priority of the at least one processing process.

2. The method of claim 1, further comprising:
determining at least one processing process which is to be completed within a target time interval; and
determining an energy harvesting state corresponding to the target time interval.

3. The method of claim 2, wherein a starting moment of the target time interval is predefined or configured by a network device.

4. The method of claim 2 or 3, wherein a length of the target time interval is predefined or configured by a network device.

5. The method of claim 2, wherein the target time interval is predefined or configured by a network device.

6. The method of any one of claims 2 to 5, wherein the target time interval is associated with at least one of a capability of the terminal device or a signal measurement result.

7. The method of claim 6, wherein the capability of the terminal device comprises at least one of:
an energy storage capacity of the terminal device;
an energy harvesting duration of the terminal device;
an energy harvesting efficiency of the terminal device; or
an energy harvesting speed of the terminal device.

8. The method of claim 6, wherein the signal measurement result comprises: a strength of a power supplying signal received by the terminal device.

9. The method of any one of claims 1 to 8, wherein the priority of the at least one processing process is determined according to a priority rule based on a type of the at least one processing process.

10. The method of claim 9, wherein the priority rule is predefined or configured by the network device.

11. The method of claim 9 or 10, wherein the type of the at least one processing process comprises at least one of: a dynamic scheduling type, a scheduling-free type, a data processing type.

12. The method of claim 11, wherein the priority rule comprises:
a priority of a processing process of the dynamic scheduling type being higher than a priority of a processing process of the scheduling-free type; and
the priority of the processing process of the scheduling-free type being higher than a priority of a processing process of the data processing type.

13. The method of any one of claims 1 to 8, wherein the priority of the at least one processing process is predefined.

14. The method of any one of claims 1 to 8, wherein the priority of the at least one processing process is configured by the network device.

15. The method of claim 14, wherein the priority of the at least one processing process is configured by the network device in a semi-static manner.

16. The method of claim 15, wherein a priority of a first processing process is carried in a scheduling indication sent by the network device, and
the first processing process is any one of the at least one processing process that is scheduled in a dynamic scheduling manner or a semi-static scheduling manner.

17. The method of any one of claims 1 to 16, further comprising:
processing the at least one target processing process according to a priority sequence of the at least one target processing process.

18. The method of any one of claims 1 to 16, further comprising:
processing the at least one target processing process according to a time sequence of the at least one target processing process.

19. The method of any one of claims 1 to 18, wherein the terminal device adopts at least one of following energy harvesting manners:
a manner of harvesting a radio frequency signal;
a manner of harvesting ambient light;
a manner of harvesting vibration energy; or
a manner of harvesting heat.

20. A wireless communication method, applied to a terminal device, comprising:
determining, according to an energy harvesting state of the terminal device, whether the terminal device is able to complete a first processing process; and
when it is determined that the terminal device is able to complete the first processing process, processing the first processing process.

21. The method of claim 20, further comprising:
when it is determined that the terminal device is unable to complete the first processing procedure, no processing the first processing procedure.

22. The method of claim 20 or 21, further comprising: before determining whether the terminal device is able to complete the first processing process according to the energy harvesting state of the terminal device,
determining the energy harvesting state of the terminal device.

23. The method of any one of claims 20 to 22, further comprising: before determining according to the energy harvesting state of the terminal device whether the terminal device is able to complete the first processing process,
determining whether there is a second processing process having a priority higher than a preset priority within a target time interval; and
wherein determining according to the energy harvesting state of the terminal device whether the terminal device is able to complete the first processing process comprises:
when there is no the second processing process within the target time interval, determining whether the terminal device is able to complete the first processing process according to the energy harvesting state.

24. The method of claim 23, further comprising:
when there is the second processing process within the target time interval, processing the second processing process and not processing the first processing process.

25. The method of claim 23 or 24, wherein a starting moment of the target time interval is predefined or configured by a network device.

26. The method of any one of claims 23-25, wherein a length of the target time interval is predefined or configured by a network device.

27. The method of claim 23 or 24, wherein the target time interval is predefined or configured by a network device.

28. The method of any one of claims 23 to 27, wherein the target time interval is associated with at least one of a capability of the terminal device or a signal measurement result.

29. The method of claim 28, wherein the capability of the terminal device comprises at least one of:
an energy storage capacity of the terminal device;
an energy harvesting duration of the terminal device;
an energy harvesting efficiency of the terminal device; or
an energy harvesting speed of the terminal device.

30. The method of claim 28, wherein the signal measurement result comprises: a strength of a power supplying signal received by the terminal device.

31. A terminal device, comprising a processing unit configured to:
determine whether the terminal device is able to complete at least one processing process according to an energy harvesting state of the terminal device; and
when it is determined that the terminal device is unable to complete the at least one processing process, determine at least one target processing process according to a priority of the at least one processing process.

32. The terminal device of claim 31, wherein the processing unit is further configured to:
determine at least one processing process to be completed within a target time interval; and
determine an energy harvesting state corresponding to the target time interval.

33. The terminal device of claim 32, wherein a starting moment of the target time interval is predefined or configured by a network device.

34. The terminal device of claim 32 or 33, wherein a length of the target time interval is predefined or configured by a network device.

35. The terminal device of claim 32, wherein the target time interval is predefined or configured by a network device.

36. The terminal device of any one of claims 32 to 35, wherein the target time interval is associated with at least one of a capability of the terminal device or a signal measurement result.

37. The terminal device of claim 36, wherein the capability of the terminal device comprises at least one of:
an energy storage capacity of the terminal device;
an energy harvesting duration of the terminal device;
an energy harvesting efficiency of the terminal device; or
an energy harvesting speed of the terminal device.

38. The terminal device of claim 36, wherein the signal measurement result comprises a strength of a power supplying signal received by the terminal device.

39. The terminal device of any one of claims 31 to 38, wherein the priority of the at least one processing process is determined according to a priority rule based on a type of the at least one processing process.

40. The terminal device of claim 39, wherein the priority rule is predefined or configured by the network device.

41. The terminal device of claim 39 or 40, wherein the type of the at least one processing process comprises at least one of a dynamic scheduling type, a scheduling-free type, a data processing type.

42. The terminal device of claim 41, wherein the priority rule comprises:
a priority of a processing process of the dynamic scheduling type being higher than a priority of a processing process of the scheduling-free type; and
the priority of the processing process of the scheduling-free type being higher than a priority of a processing process of the data processing type.

43. The terminal device of any one of claims 31 to 38, wherein the priority of the at least one processing process is predefined.

44. The terminal device of any one of claims 31 to 38, wherein the priority of the at least one processing process is configured by the network device.

45. The terminal device of claim 44, wherein the priority of the at least one processing process is configured by the network device in a semi-static manner.

46. The terminal device of claim 45, wherein a priority of a first processing process is carried in a scheduling indication sent by the network device, and
the first processing process is any one of the at least one processing process that is scheduled in a dynamic scheduling manner or a semi-static scheduling manner.

47. The terminal device of any one of claims 31 to 46, wherein the processing unit is further configured to:
process the at least one target processing process according to a priority sequence of the at least one target processing process.

48. The terminal device of any one of claims 31 to 46, wherein the processing unit is further configured to:
process the at least one target processing process according to a time sequence of the at least one target processing process.

49. The terminal device of any one of claims 31 to 48, wherein the terminal device adopts at least one of following energy harvesting manners:
a manner of harvesting a radio frequency signal;
a manner of harvesting ambient light;
a manner of harvesting vibration energy; or
a manner of harvesting heat.

50. A terminal device comprising a processing unit configured to:
determine whether the terminal device is able to complete a first processing process according to an energy harvesting state of the terminal device; and
when it is determined that the terminal device is able to complete the first processing process, process the first processing process.

51. The terminal device of claim 50, wherein the processing unit is further configured to:
when it is determined that the terminal device is unable to complete the first processing procedure, not process the first processing procedure.

52. The terminal device of claim 50 or 51, wherein the processing unit is further configured to:
determine the energy harvesting state of the terminal device.

53. The terminal device of any one of claims 50 to 52, wherein the processing unit is further configured to:
determine whether there is a second processing process having a priority higher than a preset priority within a target time interval; and
the processing unit is configured to:
when there is no second processing process within the target time interval, determine whether the terminal device is able to complete the first processing process according to the energy harvesting state.

54. The terminal device of claim 53, wherein the processing unit is further configured to:
when there is the second processing process within the target time interval, process the second processing process and not process the first processing process.

55. The terminal device of claim 53 or 54, wherein a starting moment of the target time interval is predefined or configured by a network device.

56. The terminal device of any one of claims 53 to 55, wherein a length of the target time interval is predefined or configured by a network device.

57. The terminal device of claim 53 or 54, wherein the target time interval is predefined or configured by a network device.

58. The terminal device of any one of claims 53 to 57, wherein the target time interval is associated with at least one of a capability of the terminal device or a signal measurement result.

59. The terminal device of claim 58, wherein the capability of the terminal device comprises at least one of:
an energy storage capacity of the terminal device;
an energy harvesting duration of the terminal device;
an energy harvesting efficiency of the terminal device; or
an energy harvesting speed of the terminal device.

60. The terminal device of claim 58, wherein the signal measurement result comprises: a strength of a power supplying signal received by the terminal device.

61. A terminal device comprising: a processor and a memory configured to store a computer program, wherein the processor is configured to invoke and run the computer program stored in the memory to perform the method of any one of claims 1 to 30.

62. A chip comprising: a processor configured to invoke and run a computer program from a memory, to enable a device installed with the chip to perform the method of any one of claims 1 to 30.

63. A computer-readable storage medium configured to store a computer program that causes a computer to perform the method of any one of claims 1 to 30.

64. A computer program product comprising computer program instructions that cause a computer to perform the method of any one of claims 1 to 30.

65. A computer program, causing a computer to perform the method of any one of claims 1 to 30.
